# EUROPEAN PATENT APPLICATION

(11) **EP 3 171 046 A1**
(43) Date of publication of application: **24.05.2017**
(21) Application number: 15822425.3
(22) Date of filing: 10.07.2015
(51) Int. Cl.: F16C 19/06, F16C 11/04, F16C 33/44, F16C 33/58, F16C 33/64, F16C 33/78

(54) **SUPPORT BEARING FOR CONSTANT VELOCITY JOINT, AND OUTER RING FOR CONSTANT VELOCITY JOINT**

(30) Priority: 15.07.2014 JP 2014144680
(71) Applicant: NTN Corporation, Osaka-shi, Osaka 550-0003 (JP)
(72) Inventor: TOMOGAMI Shin, Iwata-shi Shizuoka 438-8510 (JP)
(74) Representative: Grünecker Patent- und Rechtsanwälte PartG mbB
(86) International application number: PCT/JP2015/069897
(87) International publication number: WO 2016/009960

(57) **Abstract**

The present invention relates to a support bearing for a constant velocity joint in which: a ball rotation surface (33) of a bearing (4) is formed on a shaft section (32) of an outer ring (31) of an inboard-side constant velocity joint (3); a support bearing outer ring (42) is disposed to face the ball rotation surface (33); and balls (43) as a plurality of rolling elements which are held by a retainer (44) are disposed between the ball rotation surface (33) and the rotation surface of the support bearing outer ring (42). With this arrangement, the present invention makes it possible to decrease size and weight.

## Description

### TECHNICAL FIELD

The present invention relates to a support bearing for a constant velocity joint.

### BACKGROUND ART

In automobiles, driving force from an engine is transmitted to each driving wheel via a propeller shaft or a drive shaft depending on where the driving force is transmitted. The automobiles are classified into Front-engine / Front-wheel-drive vehicles (FF vehicles), Front-engine / Rear-wheel-drive vehicles (FR vehicles), Four-wheel-drive vehicles (4WD vehicles), Rear-engine / Rear-wheel-drive vehicles (RR vehicles), etc., depending on their driving method.

For improved performance and riding comfort of the automobile, many FF vehicles now utilize a shaft isometric design in which left and right drive shafts have an equal angle with each other when the automobile is traveling on a straight path.

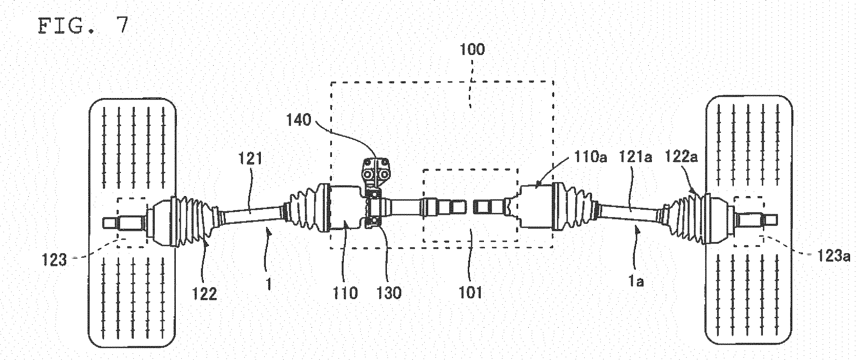

Fig. 7 is a schematic illustration of a torque transmission portion for a front wheel of an FF vehicle. As shown in Fig. 7, driving force from an unillustrated prime mover is distributed to left and right in a differential apparatus 101. One portion of the distributed power is transmitted to a wheel bearing 123 and a wheel via a drive shaft 1 which is constituted mainly by a constant velocity joint 110, a shaft 121, and a constant velocity joint 122, whereas the other portion is transmitted to a wheel bearing 123a and a wheel via a drive shaft la which is constituted mainly by a constant velocity joint 110a, a shaft 121a and a constant velocity joint 122a. The constant velocity joints 110, 110a are sliding constant velocity joints which allow axial displacement and angular displacement, whereas the constant velocity joints 122, 122a are fixed constant velocity joints which do not allow axial displacement but allow large angular displacement (approximately 47-degree operating angle).

When the engine is a transverse type, the differential apparatus 101 is placed off the center of the vehicle. In the shaft isometric design, when the differential apparatus 101 is off center, a common arrangement is that the drive shafts 1, (1a) have their inboard-side constant velocity joints 110 (110a) made to have a shorter outer ring shaft section in one of the shafts while the other is made to have a longer outer ring shaft section.

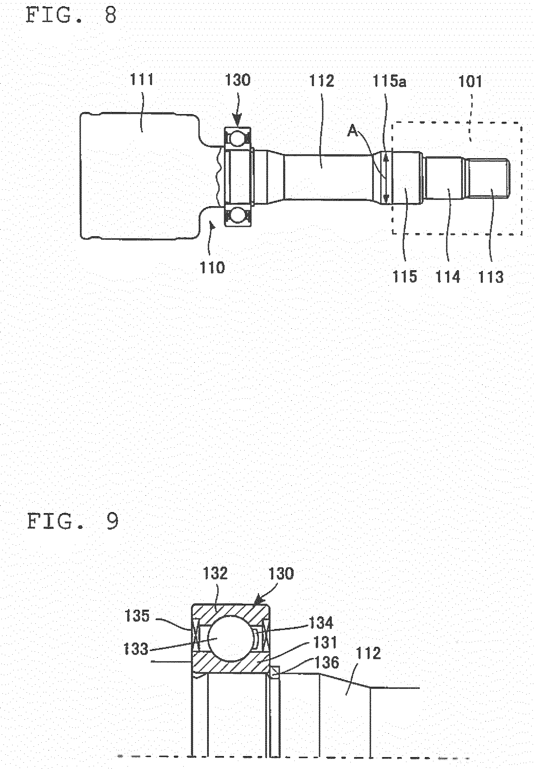

Fig. 8 is an explanatory diagram of an inboard-side constant velocity joint. Fig. 9 is an enlarged view showing a support bearing portion. As shown in Fig. 7 through Fig. 9, in the inboard-side constant velocity joint 110, a cup 111 and a shaft section 112 are integrated with each other. Further, since the longer shaft section 112 in the inboard-side constant velocity joint 110 would be instable if it is supported only by a fitting portion into the differential apparatus 101, a bearing 130 is provided around the shaft section 112, and the bearing 130 is fixed to the engine or a transmission case via a bracket 140. The bearing 130 is called support bearing.

The shaft section 112 is made of medium-carbon steel of S45C through S55C. For increased strength, surface of the shaft section 112 is hardened by means of high frequency wave heat treatment. The support bearing 130 is attached to the shaft section 112. The support bearing 130 is constituted by an inner ring 131, an outer ring 132, rolling elements provided by balls 133, a retainer 134 and seals 135. The support bearing 130 is fitted around the shaft section 112 near the cup 111 of an outer ring of the inboard-side constant velocity joint, and is axially fixed with a snap ring 136.

There is a demand for lighter material for bearing portions as a means to improve fuel efficiency. An idea therefor is to decrease the size of the support bearing 130.

The conventional support bearing 130 is fitted around the shaft section 112 near the cup 111 of the outer ring of the inboard-side constant velocity joint, and is axially fixed with the snap ring 136.

The support bearing 130 is assembled from a small-end side of the shaft section 112 of the outer ring of the inboard-side constant velocity joint, and for this reason, the support bearing 130 must have a larger inner diameter than a maximum diameter portion of the shaft section 112; in other words, must be larger than Diameter A in Fig. 8. The maximum diameter of the shaft section 112 is determined by the shape of mounting portion to the vehicle's differential apparatus 101, and it is difficult to decrease the size for reasons arising from the drive shaft.

Specifically, as shown in Fig. 8, the structure of differential apparatus 101 dictates that the shaft section 112 must have a tip portion including a side-gear fitting region 113, a differential ring gear sliding bearing region 114, a differential oil seal contact region 115, and an oil seal protection dust cover attaching region 115a before there is a shaft region for fitting the support bearing 130. Among these, the diameter increases in the order of the side-gear fitting region 113, the differential ring gear sliding bearing region 114, the differential oil seal contact region 115, and the dust cover attaching region 115a.

In other words, the maximum diameter portion of the shaft section 112 is determined by a seal diameter of the differential apparatus 101 and cannot be decreased for reasons arising from the drive shaft slide. The support bearing 130 is responsible for supporting the constant velocity joint for smooth rotation, and therefore a load born by the bearing 130 is small. Therefore, a small bearing can do the job, but in order to allow assembly to the shaft section, the bearing's inner diameter must not be smaller than the shaft section's maximum diameter.

The support bearing supports the drive shaft under a floor of the automobile, i.e., under an environment exposed to splash of water and mud. In order to prevent water and mud from entering the bearing's inner space between the inner ring and the outer ring, a seal device is utilized. Various support bearings which make use of the seal device are proposed. For example, Patent Literature 1 discloses a support bearing which offers high sealing ability and low torque loss. The device in Patent Literature 1 seals a support bearing which includes: an inner ring fixed to an intermediate shaft that transmits torque between the differential apparatus and the constant velocity joint; an outer ring fixed to a car body of the automobile via a bracket; and rolling elements disposed between track surfaces of the inner and the outer rings. A cover member extends to near the bracket and is fixed to the intermediate shaft, and a slidable brush is provided in one of the bracket and the cover member, slidably to the other.

Also, Patent Literature 2 discloses a support bearing which prevents rust caused by water and mud from occurring in an outer diameter surface of the outer ring. Patent Literature 2 discloses a sealed-type rolling bearing, in which a bearing space between an inner ring and an outer ring is sealed by contact seals, and the bearing is for applications where the inner ring is rotated. The outer ring's outer diameter surface is covered by a film of rubber or resin.

### CITATION LIST

### PATENT LITERATURE

Patent Literature 1: JP-A 2012-36973 Gazette
Patent Literature 2: JP-A 2007-127157 Gazette

### SUMMARY OF INVENTION

### TECHNICAL PROBLEM

As shown in Patent Literature 1 and 2 mentioned above, there has been various proposals made for such purposes of improved bearing life, better sealing, means for reducing rust, etc. However, while decreasing the weight of bearing materials is a demand for improved fuel efficiency, there is no consideration for weight reduction in bearing materials in Patent Literature 1 nor 2.

As has been described earlier, in the support bearing, it is not possible to make the bearing's inner diameter smaller than the shaft section's maximum diameter. There is a reason related to assembling the bearing to the shaft section. This has also been a hurdle in decreasing the size of the support bearing.

Therefore, an object of the present invention is to provide a smaller, lighter support bearing for a constant velocity joint.

### SOLUTION TO PROBLEM

In order to achieve the above-stated object, the present invention provides a support bearing which includes: an inboard-side constant velocity joint including an outer ring having a shaft section which has an outer diameter surface formed with a rotation surface for the support bearing; a support bearing outer ring opposed to the rotation surface; and a plurality of rolling elements held by a retainer and disposed between said rotation surface and a rotation surface of the support bearing outer ring.

It is preferable that the seal contact surfaces are formed on both sides of the rotation surface, and that the rotation surfaces and the seal contact surfaces are hardened by means of high frequency quenching.

Also, it is desirable that the seal contact surface has a greater outer diameter than a maximum diameter of the shaft section of the outer ring of the inboard-side constant velocity joint.

It should be noted here that the following two terms are determined with the drive shaft installed to an automobile; the term inboard-side refers to a side closer to the centerline of the automobile whereas the term outboard-side refers to a side closer to an outer side of the automobile.

The retainer may be provided by one formed of a resin.

The present invention also provides an outer ring of an inboard-side constant velocity joint, in which the outer ring is an integrated structure of a cup and a shaft section; the cup has an inner surface formed with a plurality of straight track grooves on which torque transmission members roll; and the shaft section has an outer diameter surface formed with a ball rotation surface for a support bearing.

### ADVANTAGEOUS EFFECTS OF INVENTION

As described, according to the present invention, it is possible to use the maximum diameter of the shaft section of the outer ring of the inboard-side constant velocity joint as a dimension of an outer diameter of the support bearing's inner ring, i.e., it is possible to make a smaller support bearing than the conventional, separate support bearing. Further, it becomes possible to eliminate the inner ring of the bearing, i.e., to decrease the number of parts and to further decrease the weight.

### BRIEF DESCRIPTION OF DRAWINGS

Fig. 1 is an explanatory diagram which shows an inboard-side constant velocity joint according to an embodiment of the present invention.
Fig. 2 is an enlarged view which shows a support bearing portion according to the embodiment of the present invention.
Fig. 3 is an enlarged view which shows a shaft section of a constant velocity joint for the support bearing portion according to the embodiment of the present invention.
Fig. 4 is a perspective view which shows a state where the support bearing is assembled to the inboard-side constant velocity joint according to the embodiment of the present invention.
Fig. 5 is a perspective view which shows a state where the support bearing is assembled to the inboard-side constant velocity joint according to the embodiment of the present invention.
Fig. 6 is an explanatory diagram which shows an embodiment where the present invention is applied to a drive shaft.
Fig. 7 is a schematic illustration which shows a torque transmission portion of a front wheel in an FF vehicle.
Fig. 8 is an explanatory diagram which shows a conventional inboard-side constant velocity joint.
Fig. 9 is an enlarged view which shows a support bearing for the constant velocity joint shown in Fig. 8.

### DESCRIPTION OF EMBODIMENTS

Hereinafter, embodiments of the present invention will be described based on the attached drawings. The present invention relates to a support bearing for fixing an inboard-side constant velocity joint of a drive shaft utilized in an automobile to an engine or a transmission case while providing smooth rotation of the drive shaft.

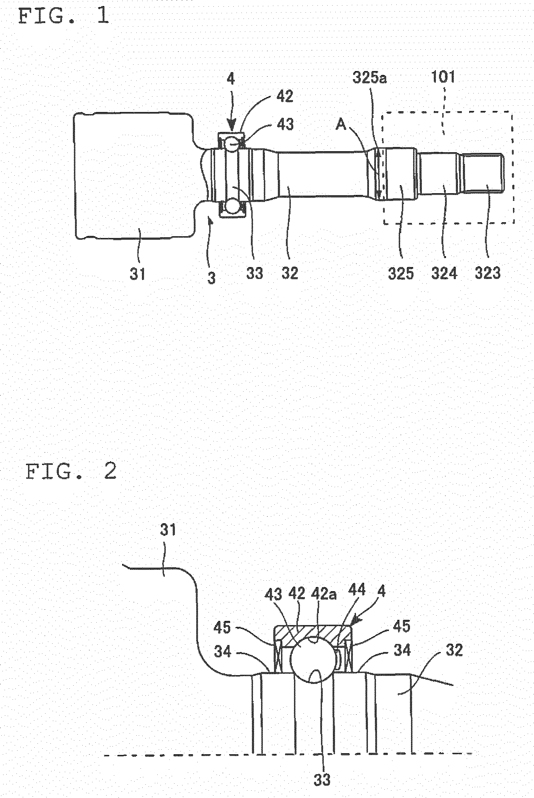

Conventionally, a shaft section 32 of an outer ring in an inboard-side constant velocity joint 3 as shown in Fig. 1 and Fig. 2 is made of medium-carbon steel being steel type of S45C and S55C for example, and is hardened in high-frequency quenching. It is possible to increase surface hardness to HRC (Rockwell Hardness C scale) 58 through 64. The surface with this level of hardness is usable as a rolling surface in a bearing for a light-load application. Based on this, the present invention provides a support bearing 4, wherein in place of a conventional separate inner ring, a ball rotation surface 33 is formed on a shaft section 32 of an outer ring of the inboard-side constant velocity joint 3, whereby an inner ring of the support bearing 4 is integrated with the shaft section 32 of the outer ring of the inboard-side constant velocity joint 3.

The arrangement makes it possible to make a groove bottom of the rotation surface 33 which is formed on the outer diameter surface of the shaft section 32 smaller than a maximum diameter A (dust cover attaching region 325a) of the shaft section 32 of the outer ring of the inboard-side constant velocity joint 3, i.e., it becomes possible to make a smaller support bearing than the conventional support bearing which has a separate inner ring. Further, it becomes possible to eliminate the inner ring of the bearing, i.e., to decrease the number of parts and to further decrease the weight.

In this case, the support bearing 4 has a decreased ball pitch diameter, and therefore the bearing cannot have a load capacity equal to that of the conventional separate bearing. However, the purpose of the support bearing 4 is to support the inboard-side constant velocity joint 3, which does not require a large load capacity. Therefore, the bearing is still usable even if the load capacity is decreased.

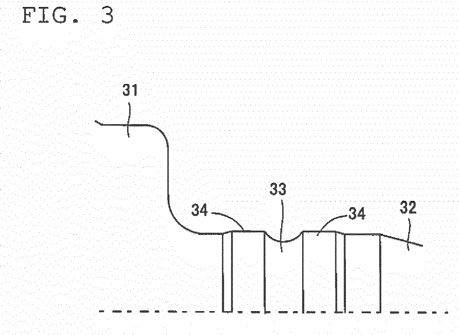

Referring to Fig. 1 through Fig. 3, detailed description will be given for embodiments of the present invention. In the following embodiment, a support bearing 4 is provided around a shaft section near a cup 31 of an outer ring of an inboard-side constant velocity joint 3. In the inboard-side constant velocity joint 3, the cup 31 and the shaft section 32 are integrated with each other. With the above arrangement, the shaft section 32 of the inboard-side constant velocity joint 3 has its tip portion fitted into a differential apparatus 101.

The tip of the shaft section 32 includes, in order from the tip portion, a side-gear fitting region 323, a differential ring gear sliding bearing region 324, a differential oil seal contact region 325, and an oil seal protection dust cover attaching region 325a. By structure of the differential apparatus 101, as described earlier, the diameter of the shaft increases in the order of the side-gear fitting region 323, the differential ring gear sliding bearing region 324, the differential oil seal contact region 325, and the dust cover attaching region 325a. The dust cover attaching region 325a has a maximum diameter A.

In the present invention, in place of the inner ring 131 in the conventional support bearing 130, a ball rotation surface 33 is directly formed on an outer diameter surface of the shaft section 32 of the outer ring of the inboard-side constant velocity joint 3, whereby the inner ring of the support bearing 4 is integrated with the shaft section 32 of the outer ring of the inboard-side constant velocity joint. Specifically, in the present embodiment, the ball rotation surface 33 of the support bearing 4 is formed on a region which traditionally was the place to mount the support bearing 4; and seal contact surfaces 34 are formed on both sides thereof. The rotation surface 33 formed on the outer diameter surface of the shaft section 32 has its groove bottom which can be made smaller than maximum diameter A (the dust cover attaching region 325a) of the shaft section 32 of the outer ring of the inboard-side constant velocity joint 3. As a result, it is possible to make the support bearing 4 smaller in diameter than conventional ones, and therefore to decrease the weight of the vehicle.

As has been described earlier, the shaft section 32 is preferably made of medium-carbon steel being steel type of S45C and S55C for example, and surfaces of the shaft section 32, including the ball rotation surface 33 and the seal contact surface, are hardened by means of high-frequency quenching for increased strength.

This region where there is formed the ball rotation surface 33 in the shaft section 32 serves as an inner ring of the support bearing 4; and the support bearing 4 is constituted by using the ball rotation surface 33. To oppose the ball rotation surface 33, there is disposed a support bearing outer ring 42; and a plurality of balls 43 are disposed between the ball rotation surface 33 and the rotation surface 42a of the support bearing outer ring 42, as rolling elements. Further, there is provided a retainer 44 which keeps these balls 43 equidistantly in the circumferential direction; and bearing seals 45 are provided on both axial end openings of the support bearing outer ring 42 on the seal contact surfaces 34 for sealing inside of the bearing. Inside the sealed bearing, grease is filled at least around the balls 43. Each bearing seal 45 has its one end fixed to the support bearing outer ring 42, with the other end making contact with the seal contact surface 34 of the shaft section 32.

The bearing seal 45 may be provided by a single piece formed of rubber, or a composite piece of formed rubber and a metal plate, a plastic plate or a ceramic plate.

By forming the ball rotation surface 33 of the support bearing 4 on the shaft section 32 of the outer ring of the inboard-side constant velocity joint, the invention provides a conventional constitution of a bearing but less the inner ring. The support bearing outer ring 42, the balls 43, the retainer 44 and the bearing seals 45 may be made in conventional method and materials.

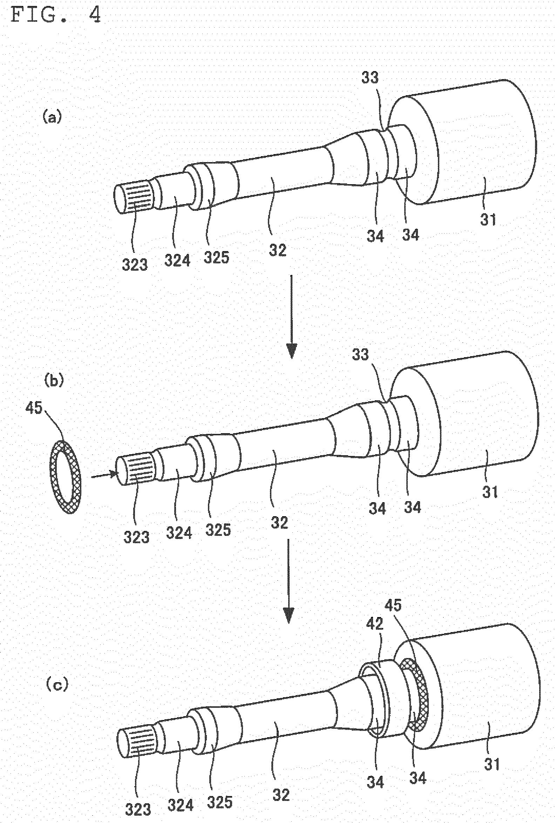

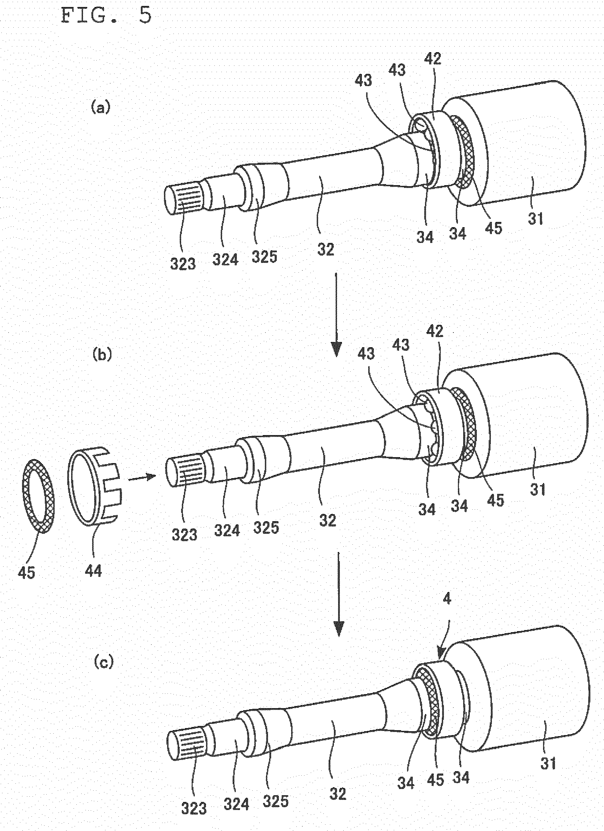

Next, the following description will cover an assembly procedure of the support bearing 4 according to the present embodiment, which is integrated with the shaft section 32 of the outer ring, with reference to Fig. 4 and Fig. 5. First, as shown in Fig. 4(a), there is prepared an outer ring of a constant velocity joint which has the shaft section 32 having a mounting region for the support bearing 4 formed with the bearing ball rotation surface 33 and the seal contact surfaces 34. As shown in Fig. 4(b), one of the bearing seals 45 is inserted around the shaft section 32, from the side-gear fitting region 323 thereof, and is slid to bottom.

Then, as shown in Fig. 4(c), the support bearing outer ring 42 is inserted; and then, as shown in Fig. 5(a), the support bearing outer ring 42 is off-centered to allow insertion of the balls 43 between the ball rotation surface 33 of the shaft section 32 and the rotation surface 42a of the support bearing outer ring 42. Fig. 5(a) shows a state after the balls 43 have been inserted. Thereafter, as shown in Fig. 5(b), the balls 43 are distributed equidistantly; then, the retainer 44 is assembled from the side-gear fitting region 323; grease is filled; and the bearing seals 45 are fitted onto the seal contact surfaces 34 and the openings on both axial sides of the support bearing outer ring 42 to seal inside of the bearing. Thus, there is provided the support bearing 4, as shown in Fig. 5(c), which is integral with the shaft section 32.

From a design point of view, it is preferable that the seal contact surfaces 34 of the support bearing 4 has a larger outer diameter than the maximum diameter A (see Fig. 1) of the shaft section 32; however, it may be smaller if there is no problem in sealing and it is possible to slide the seals to the seal fitting position.

From a bearing-life point of view, it is desirable that the ball rotation surface 33 which serves as an inner side of the bearing 4 has a surface hardness not lower than HRC 58. Generally, the ball rotation surface 33 is given a finishing operation (super finish) after grinding operation. However, since the support bearing 4 is utilized under a light-load condition with a slow maximum rotation speed, the finishing operation (super finish) may be omitted. In the present embodiment, the retainer 44 is provided by a crown-shaped resin retainer to enable assembly around the drive shaft.

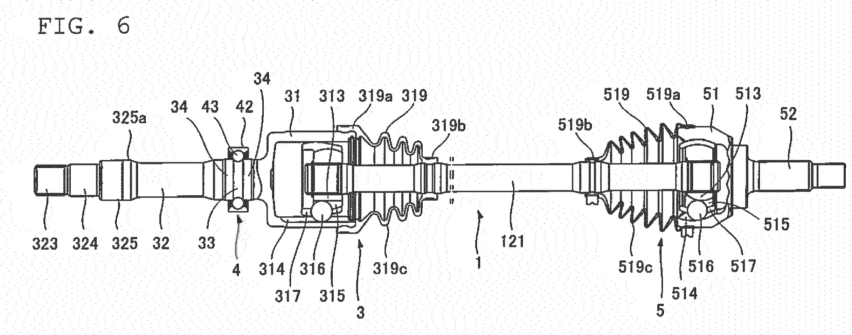

Fig. 6 is an explanatory diagram which shows an embodiment where a support bearing according to the present invention is applied to a drive shaft. On the differential apparatus side of the drive shaft 1, there is disposed a constant velocity joint 3 which is provided by a sliding constant velocity joint according to the present invention, whereas on the other side, there is disposed a constant velocity joint 5 which is provided by a fixed constant velocity joint.

In the constant velocity joint 3, a cup 31 of the outer ring and the shaft section 32 are integrated with each other. The tip of the shaft section 32 includes, in order from the tip portion, a side-gear fitting region 323, a differential ring gear sliding bearing region 324, a differential oil seal contact region 325, and an oil seal protection dust cover attaching region 325a.

The ball rotation surface 33 of the bearing 4 is formed on the outer diameter surface of the shaft section 32, and the seal contact surfaces 34 are formed on both sides thereof. To oppose the ball rotation surface 33, there is disposed the support bearing outer ring 42; and a plurality of balls 43 held by the retainer are disposed between the ball rotation surface 33 and the rotation surface 42a of the support bearing outer ring 42 (see Fig. 2). The inner ring of the support bearing 4 is integrated with the shaft section 32 of the outer ring of the inboard-side constant velocity joint. The support bearing 4 is fixed to the engine or the transmission case via a bracket.

A shaft 121 is connected to the inner-ring of the constant velocity joint 3. A plurality of axial straight tracking grooves 314, 315 are formed on an inner surface of the cup 31 of the outer ring and an outer surface of the inner ring 313. Balls 316 are placed between the tracking grooves 314, 315, and held by a cage 317. The cage 317 has a spherical outer circumference and a spherical inner circumference to fit to the outer circumference of the inner ring 313.

A boot 319 which is formed of a rubber composition or of a resin covers from the cup 31 of the outer ring to the shaft 121 connected to the inner ring 313.

The boot 319 includes an outer tube end portion (large-diameter mounting portion) 319a which is fitted and fixed around the cup 31 of the outer ring, an inner tube end portion (small-diameter mounting portion ) 319b which is fitted and fixed around the shaft 121 connected to the inner ring, and a bellows-like bendable portion 319c which has a plurality of ridges and valleys and connects these outer tube end portion 319a and inner tube end portion 319b, to provide a sealing cover around the constant velocity joint.

Lubricant such as grease (not illustrated) is placed in this sealed space. The outer tube end portion 319a of the boot 319 is fitted around the cup 31 and is fixed with a clamp for example. On the other hand, the inner tube end portion 319b is fixed around the shaft 121 with a clamp for example.

The shaft 121 is connected with the inner-ring of the constant velocity joint 5. In the constant velocity joint 5, a cup 51 of the outer ring and the shaft section 52 are integrated with each other.

A plurality of axial tracking grooves 514, 515 are formed on an inner surface of the cup 51 of the outer ring and an outer surface of the inner ring 513. Balls 516 are placed between the tracking grooves 514, 515 and held by a cage 517. The cage 517 has a spherical outer circumference to fit to an inner of the cup 51 of the outer ring, and a spherical inner circumference to fit the outer circumference of the inner ring 513.

A boot 519 which is formed of a rubber composition or of a resin covers from the cup 51 of the outer ring to the shaft 121 connected with the inner ring 513.

The boot 519 includes an outer tube end portion (large-diameter mounting portion) 519a which is fitted and fixed around the cup 51 of the outer ring, an inner tube end portion (small-diameter mounting portion) 519b which is fitted and fixed around the shaft 121 connected with the inner ring, and a bellows-like bendable portion 519c which is made of a plurality of ridges and valleys and connects these outer tube end portion 519a and inner tube end portion 519b, to provide a sealing cover around the constant velocity joint 5.

Lubricant such as grease (not illustrated) is in this sealed space. The outer tube end portion 519a of the boot 519 is fitted around the cup 51 and is fixed with a clamp for example. On the other hand, the inner tube end portion 519b is fixed around the shaft 121 with a clamp for example.

As described, the present invention is applicable to drive shafts, making it possible to decrease weight of the drive shaft. In the embodiments described, the sliding constant velocity joint was provided by a ball-type, double-offset constant velocity joint (DOJ) as an example, which utilizes balls as torque transmission members; however, the joint may be provided by a roller-type tripod-type constant velocity joint (TJ) which utilizes rollers as torque transmission members. Also, the support bearing 4 was provided by one which utilizes balls 43 as rolling elements; however, the present invention is not limited to this, i.e., it may utilize rollers, or in other words, any will do as long as it is a rolling bearing.

### REFERENCE SIGNS LIST

- 3: Constant Velocity Joint
- 4: Support Bearing
- 31: Cup
- 32: Shaft Section
- 33: Ball Rotation Surface
- 34: Seal Contact Surface
- 42: Outer Ring
- 43: Ball
- 44: Retainer
- 45: Bearing Seal

## Claims

1. A support bearing for a constant velocity joint, comprising: an inboard-side constant velocity joint including an outer ring having a shaft section which has an outer diameter surface formed with a rotation surface for the support bearing; a support bearing outer ring opposed to the ball rotation surface; and a plurality of rolling elements held by a retainer and disposed between said rotation surface and a rotation surface of the support bearing outer ring.

2. The support bearing for a constant velocity joint according to Claim 1, wherein the seal contact surfaces are formed on both sides of the rotation surface.

3. The support bearing for a constant velocity joint according to Claim 2, wherein the rotation surfaces and the seal contact surfaces are hardened by means of high frequency quenching.

4. The support bearing for a constant velocity joint according to one of Claim 1 through 3, wherein the rotation surface formed in the outer diameter surface of the shaft section includes a groove bottom having a diameter smaller than a maximum diameter of the shaft section of the outer ring of the inboard-side constant velocity joint.

5. The support bearing for a constant velocity joint according to Claim 1, wherein the retainer is made of a resin.

6. An outer ring of an inboard-side constant velocity joint, wherein the outer ring is an integrated structure of a cup and a shaft section; the cup has an inner surface formed with a plurality of straight track grooves for torque transmission members to roll; and the shaft section has an outer diameter surface formed with a ball rotation surface for a support bearing.
